# FASCICULE DE BREVET EUROPEEN

(11) **EP 2 286 282 B1**
(45) Date de publication et mention de la délivrance du brevet: **11.10.2017**
(21) Numéro de dépôt: 09757700.1
(22) Date de dépôt: 04.06.2009
(51) Int. Cl.: G01W 1/10, G08B 21/10

(54) **SYSTÈME D'ALERTE POUR UN PHÉNOMÈNE MÉTÉOROLOGIQUE**
WARNSYSTEM FÜR METEOROLOGISCHE PHÄNOMENE
WARNING SYSTEM FOR A METEOROLOGICAL PHENOMENON

(30) Priorité: 04.06.2008 FR 0853696
(43) Date de publication de la demande: 23.02.2011
(73) Titulaire: Egis Eau, 34965 Montpellier (FR)
(72) Inventeur: LESCOULIER, Christophe, F-34920 Le Cres (FR); PEYRON, Nelly, F-34090 Montpellier (FR); RAYMOND, Mireille, F-34160 Saussines (FR); MONIER, Thierry, F-34110 Vic La Gardiole (FR)
(74) Mandataire: Derambure Conseil
(86) Numéro de dépôt international: PCT/FR2009/000655
(87) Numéro de publication internationale: WO 2009/147324

(56) Documents cités:
- US-A1- 2001 030 624
- US-A1- 2005 027 449

## Description

### DOMAINE TECHNIQUE DE L'INVENTION

L'invention se rapporte à un terminal d'alerte pour un phénomène météorologique. L'invention se rapporte également à un système d'alerte comportant un tel terminal, ainsi qu'à un procédé d'alerte pour un phénomène météorologique. L'invention s'applique en particulier à la prévision des crues et des inondations.

### ETAT DE LA TECHNIQUE ANTERIEURE

Il est utile de prévenir les usagers en en cas de risque de fortes précipitations pouvant entraîner des crues, et notamment les collectivités locales afin de leur permettre de décider des mesures appropriées de protection ou d'évacuation les populations.

On connaît différents outils permettant d'émettre des alertes en cas de crues. Ainsi, le document FR2868547 décrit un dispositif d'alerte pour des phénomènes météorologiques comme les crues. Ce dispositif comprend des moyens d'acquisition d'informations spatiales pixellisées de paramètres météorologiques, sur une zone géographique donnée, des moyens de comparaison et d'analyse point par point de ces informations à au moins une base d'informations statistiques relative au phénomène météorologique, ainsi que des moyens de discrimination des classes de risques définissant l'échelle de gravité par des plages de fréquence d'apparition associées aux paramètres représentant le phénomène observé ou prévu.

Ce dispositif permet donc de prédire, sur chaque pixe, correspondant à un secteur de 1 km², si une crue va survenir ou non. Cependant, il utilise de manière intensive des informations statistiques relatives à l'historique du phénomène météorologique observé, ce qui impose une puissance de calcul élevée nécessitant avec un système de calcul centralisé mais peu compatible avec un système réparti. Par ailleurs, la prévision des crues a lieu pixel par pixel, mais sur un territoire relativement étendu, et elle n'est donc pas adaptée à un secteur particulier. En effet, chaque collectivité veut juste connaître le risque d'inondations dans sa commune. Un système donnant des prévisions météorologiques locales est donc nécessaire.

Dans ce domaine, on connaît le document FR2864850 qui présente des terminaux pour signaler des prévisions de précipitations à des utilisateurs en fonction de l'endroit où ils se trouvent. Chaque terminal comporte des moyens de télécommunications agencés pour recevoir des données météorologiques, un système de positionnement du terminal et une interface utilisateur qui affiche les prévisions météorologiques en fonction du temps dans le secteur où se trouve l'utilisateur. Pour cela, le terminal envoie sa position à un centre de prévision et le centre de prévision lui renvoie les prévisions de précipitations correspondant à sa position pour les 60 minutes à venir. Cet échange peut se faire automatiquement et il permet au terminal d'avoir à tout instant les prévisions de précipitations correspondant à l'endroit où il se trouve.

Cependant, ce type de terminal ne comporte pas de moyens d'alerte en cas de prévision de précipitations et l'utilisateur doit surveiller en permanence l'interface utilisateur pour savoir s'il va pleuvoir ou non. Par ailleurs, les terminaux ne permettent pas de quantifier les précipitations à venir, ni de les localiser ou de les visualiser dans l'espace, par exemple en les représentant sous forme de carte. Les terminaux ne permettent pas non plus de prévoir des crues. Enfin, toutes les prévisions de précipitations sont effectuées par le centre de prévision, puis elles sont ensuite envoyées au cas par cas en fonction de la localisation des terminaux connectés au centre de prévision, ce qui implique une communication bidirectionnelle entre le centre de calcul et les terminaux et l'envoi par le centre de calcul de données spécifiques à chaque terminal. Le document US2005/0027449 décrit un autre exemple.

### EXPOSE DE L'INVENTION

L'invention vise à remédier aux inconvénients de l'état de la technique en proposant un dispositif permettant d'alerter un utilisateur, de manière simple et fiable, qu'un risque d'inondations existe dans le secteur où il se trouve. La présente invention propose également de quantifier ce risque et de cartographier le risque de crues ou d'inondations existant autour du secteur dans lequel se trouve l'utilisateur. L'invention permet, plus généralement, d'avertir un utilisateur qu'un risque météorologique supérieur au seuil d'alerte qu'il s'est fixé est prévu dans la zone où il se trouve.

Selon un premier aspect de l'invention, celle-ci a trait à un terminal d'alerte pour un phénomène météorologique, comportant :
- des moyens de réception de données météorologiques d'une zone géographique transmises depuis un serveur distant de manière à constituer au moins une table bidimensionnelle de données météorologiques, la table comportant des cellules chacune correspondant à un secteur géographique élémentaire donné de la zone géographique,
- des moyens de positionnement du terminal dans la zone géographique pour déterminer le secteur géographique élémentaire de la zone géographique dans lequel se trouve le terminal,
- une mémoire comportant des données topographiques, cartographiques et/ou hydrologiques de la zone géographique,
- des moyens d'analyse pour calculer le risque météorologique dans le secteur géographique élémentaire dans lequel se trouve le terminal à partir :
   - de la connaissance du secteur géographique élémentaire dans lequel se trouve le terminal,
   - des données topographiques, cartographiques et/ou hydrologiques, et
   - de la table bidimensionnelle de données météorologiques,
- des moyens de comparaison de ce risque météorologique à au moins un seuil d'alerte,
- une interface de sortie comportant des moyens d'alerte permettant de signaler à un utilisateur un dépassement du seuil d'alerte, le terminal comporte en outre une interface d'entrée permettant à un utilisateur de paramétrer le seuil d'alerte.

Par « données topographiques », on entend données relatives à la configuration d'un lieu, c'est-à-dire données relatives au relief d'un lieu bien sûr, mais également à son occupation, comme par exemple la présence ou non de bâtiments et en particulier de bâtiments sensibles.

Grâce aux moyens d'analyse intégrés au terminal, il est possible d'effectuer l'ensemble des calculs de prévision du phénomène météorologique localement, dans le terminal, à partir des données météorologiques standard envoyées par le serveur. En pratique, les données météorologiques sont constituées par des images radars envoyées à intervalle régulier, par exemple toute les cinq minutes.

Le dispositif peut également tenir compte d'une série de tables bidimensionnelles, envoyées à intervalle régulier et mémorisées par le dispositif. La série de tables bidimensionnelles est ensuite traitée par les moyens d'analyse.

L'interface de sortie avertit l'utilisateur dès que le risque météorologique est trop élevé. L'utilisateur n'a donc pas besoin de surveiller le terminal en permanence. Par ailleurs, le terminal compare le risque pour le phénomène météorologique à un ou plusieurs seuils d'alerte, de sorte que le terminal peut envoyer plusieurs signaux d'alerte à l'utilisateur : par exemple, si le signal d'alerte est sonore, lorsque lé risque météorologique dépasse le premier seuil d'alerte, l'interface de sortie peut envoyer à l'utilisateur un premier son de faible intensité lui indiquant que le premier seuil d'alerte a été dépassé. Si le risque météorologique dépasse le second seuil d'alerte, l'interface envoie un signal sonore de plus grande intensité et ainsi de suite jusqu'au dernier seuil d'alerte définit par l'utilisateur. Ce système permet donc de définir plusieurs niveaux d'alerte. La distinction entre ces différents niveaux d'alerte peut également se faire visuellement à l'aide de couleurs, chacune représentant un seuil d'alerte.

Le terminal d'alerte comporte en outre une interface d'entrée permettant à un utilisateur de paramétrer le seuil d'alerte. Ainsi, l'utilisateur peut choisir le ou les seuil(s) d'alerte à partir duquel(desquels) il souhaite être prévenu. Cette interface d'entrée peut également permettre à l'utilisateur de choisir d'autres paramètres, comme par exemple le nombre de tables bidimensionnelles que les moyens d'analyse doivent prendre en compte dans le calcul du risque météorologique.

Selon différents modes de réalisation de l'invention, les moyens de réception sont aptes à recevoir des ondes radio ou des micro-ondes. De manière générale, les données météorologiques peuvent être transmises grâce à des ondes, dont la fréquence peut être choisie en fonction de la forme que prend le terminal. Alternativement, elles peuvent être transmises de manière filaire, par exemple par des fibres optiques.

Avantageusement, l'interface comporte des moyens d'alerte sonores, visuelles ou tactiles. En outre, le mode d'alerte peut également être choisi par l'utilisateur.

Selon un mode de réalisation préférentiel, les moyens d'analyse permettent d'établir une cartographie des risques météorologiques pour un ensemble de secteurs géographiques élémentaires entourant le secteur géographique élémentaire dans lequel se trouve le terminal, et l'interface de sortie comporte des moyens d'affichage permettant de représenter ces risques. Ainsi l'utilisateur peut-il visualiser le risque météorologique non seulement pour le secteur géographique élémentaire dans lequel il se trouve mais aussi pour un territoire plus étendu. Par exemple, l'utilisateur peut utiliser le terminal pour surveiller tout un bassin versant.

Avantageusement, les moyens d'alerte sont activés dès qu'un des secteurs géographiques élémentaires présente un risque supérieur au seuil d'alerte.

Le nombre de secteurs élémentaires concernés par ce calcul de risque et par cette alerte peut également être choisi par l'utilisateur. Ainsi, l'utilisateur peut choisir l'étendue du territoire qu'il souhaite placer sous surveillance. Par exemple, un maire peut choisir de placer toute sa commune ou tout un bassin versant sous surveillance.

Avantageusement, chaque secteur géographique élémentaire correspond à 1 km². Ce découpage correspond en effet à la précision des radars actuels, mais avec les améliorations des moyens de mesure, ce découpage pourra devenir plus précis.

Selon un deuxième aspect, l'invention concerne un téléphone portable comportant un terminal d'alerte selon un des modes de réalisation décrit précédemment.

L'invention concerne également, selon un troisième aspect, un système d'alerte pour un phénomène météorologique, comportant un serveur délivrant des données météorologiques et un ou plusieurs terminaux selon l'un quelconque des modes de réalisation précédents, chaque terminal étant relié au serveur à l'aide de moyens de télécommunications.

Ainsi, le serveur délivre les mêmes données météorologiques à tous les terminaux de la zone géographique, ce qui simplifie l'envoi des données. Cette zone géographique peut être plus ou moins étendue : elle peut par exemple correspondre à un pays, un bassin versant ou à la zone couverte par un radar. Aucun tri ou traitement préalable des données météorologiques n'est nécessaire puisque les données envoyées ne sont pas spécifiques des terminaux, si bien que le serveur n'a pas besoin d'avoir de grandes capacités de calcul. Chaque terminal reçoit donc les mêmes données météorologiques brutes, et à partir de ces données, chaque terminal réalise un calcul personnalisé de prévision du phénomène météorologique, en fonction de sa position.

Selon un quatrième aspect, l'invention concerne un procédé d'alerte pour un phénomène météorologique, comportant les étapes suivantes:
- un serveur délivre, à l'aide de moyens de télécommunication, des données météorologiques pixellisées, les données météorologiques correspondant à une zone géographique divisée en secteurs géographiques élémentaires,
- des terminaux, mobiles ou fixes, reçoivent les données météorologiques, les terminaux comportent une interface d'entrée permettant à des utilisateurs de paramètrer des seuils d'alerte,
- chaque terminal repère sa position dans la zone géographique,
- chaque terminal calcule un risque météorologique à partir des données météorologiques, de données topographiques, cartographiques et/ou hydrologiques et de sa position,
- chaque terminal compare ce risque météorologique à un seuil d'alerte,
- chaque terminal émet un signal d'alerte en cas de dépassement du seuil d'alerte.

Avantageusement, chaque terminal peut réaliser une cartographie des risques météorologique pour un ensemble de secteurs géographiques élémentaires entourant le secteur géographique élémentaire dans lequel il se trouve par transformation des données météorologiques pour chaque secteur géographique élémentaire, puis prise en compte des données topographiques, cartographiques et/ou hydrologiques.

Avantageusement, le terminal sélectionne les données topographiques, cartographiques et/ou hydrologiques correspondant au secteur géographique élémentaire dans lequel il se trouve.

Avantageusement, le terminal prend en compte les données topographiques, cartographiques et/ou hydrologiques correspondant aux secteurs géographiques élémentaires entourant le secteur géographique élémentaire dans lequel il se trouve.

Avantageusement, les données météorologiques comportent des prévisions de précipitations et en ce que le risque météorologique calculé est un risque d'inondation.

### BREVE DESCRIPTION DES FIGURES

D'autres caractéristiques et avantages de l'invention ressortiront à la lecture de la description qui suit, en référence aux figures annexées, qui illustrent :
- la figure 1, une représentation schématique d'un terminal d'alerte à l'inondation selon un mode de réalisation de la présente invention,
- la figure 2, une représentation schématique d'un procédé selon l'invention.

Pour plus de clarté, les éléments identiques ou similaires sont repérés par des signes de référence identiques sur l'ensemble des figures.

### DESCRIPTION DETAILLEE D'UN MODE DE REALISATION

Dans l'exemple considéré, le terminal d'alerte est un terminal d'alerte à l'inondation.

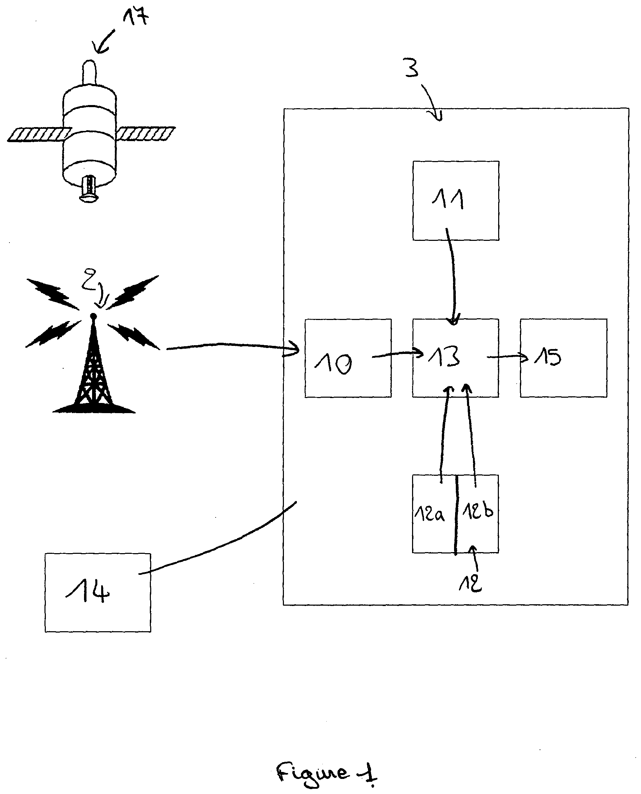

La figure 1 représente un terminal 3 selon l'invention. Ce terminal 3 comporte des moyens de réception 10 aptes à recevoir des ondes radio, des moyens de positionnement du dispositif 11, une mémoire 12, des moyens d'analyse 13 constitués par un ou plusieurs microprocesseurs, une interface d'entrée 14 et une interface de sortie 15.

La mémoire peut comporter une mémoire vive 12a et une mémoire dure 13b. L'interface d'entrée 14 est constituée par un clavier, mais elle peut également être constituée par un écran tactile ou par un écran avec un stylet. L'interface de sortie 15 comporte un écran permettant de visualiser la cartographie du risque d'inondation sur un ensemble de secteurs géographiques élémentaires et un avertisseur sonore permettant d'alerter l'utilisateur lorsque le seuil d'alerte qu'il a fixé est dépassé sur au moins l'un des secteurs géographiques élémentaires sous surveillance.

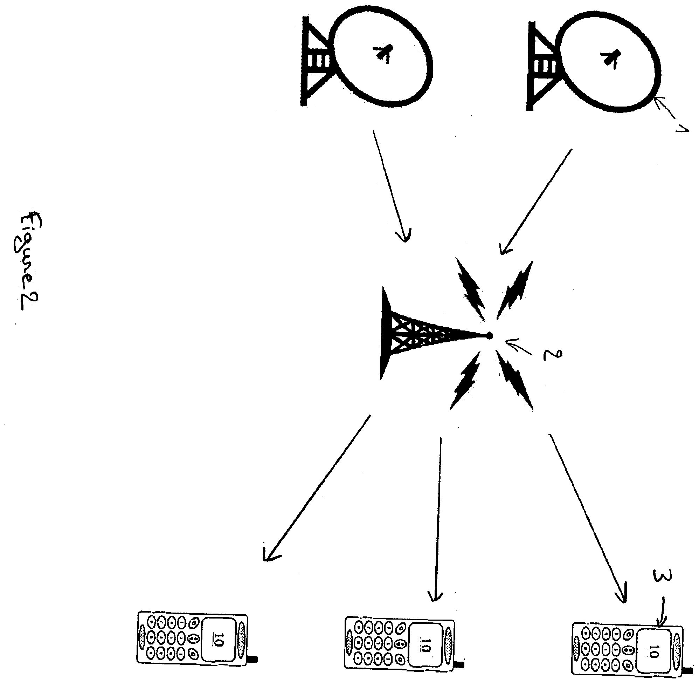

En référence à la figure 2, on décrit à présent un procédé suivant un mode de réalisation de la présente invention.

Dans un premier temps, un réseau de radars météorologiques 1 fournit à un serveur 2 des données météorologiques brutes relatives aux observations météorologiques radar de précipitations pour l'ensemble d'une zone géographique. Dans cet exemple, la zone géographique est l'ensemble de la France, mais cette zone géographique peut être plus ou moins étendue : elle peut par exemple se limiter à un bassin versant ou à la zone couverte par un radar. La zone géographique est divisée en secteurs géographiques élémentaires, chaque secteur géographique élémentaire correspondant ici à 1 km².

Les données météorologiques sont ensuite envoyées à l'état brut à l'ensemble des terminaux 3 d'alerte à l'inondation. Ainsi, chaque terminal 3 reçoit les données météorologiques pour l'ensemble des secteurs géographiques élémentaires de la zone géographique grâce aux moyens d'analyse 10. Le serveur 2 envoie donc les mêmes données météorologiques à tous les terminaux 3, ce qui simplifie l'envoi. En effet, aucun tri ou traitement préalable des données météorologiques n'est nécessaire, si bien que le serveur 2 n'a pas besoin d'avoir de grandes capacités de calcul. Le serveur n'a pas non plus besoin d'avoir une unité de traitement qui lui permet de savoir quelles données envoyer à quel terminal.

Les données météorologiques forment une base bidimensionnelle constituée de cellules, chaque cellule comportant les données météorologiques relatives à un secteur géographique élémentaire. Les bases bidimensionnelles de données météorologiques sont envoyées par le serveur 2 à intervalle régulier; dans cet exemple, l'intervalle temporel entre l'envoi de deux bases bidimensionnelles successives est de cinq minutes.

Parallèlement, chaque terminal 3 détermine sa localisation dans l'espace, c'est-à-dire que chaque terminal 3 détermine le secteur géographique élémentaire de 1 km² dans lequel il se trouve. Cette détermination de la localisation du terminal 3 se fait grâce au moyen de positionnement 11, constitué ici par un GPS 17. La détermination du positionnement du terminal pourrait aussi se faire par triangulation, lorsque le terminal est relié à plusieurs relais simultanément, par exemple au sein d'un réseau téléphonique cellulaire.

Une fois sa position déterminée, chaque terminal 3 calcule le risque d'inondation grâce aux moyens d'analyse 13. Pour cela, les moyens d'analyse 13 calculent la lame d'eau prévue, c'est-à-dire la hauteur d'eau moyenne qui va tomber par seconde sur un territoire donné. Cette détermination de la lame d'eau peut se faire pour un ou plusieurs secteurs élémentaires particuliers ou comme une moyenne pondérée sur un ensemble de secteurs. En particulier, le calcul du risque d'inondation dans un secteur géographique élémentaire particulier peut prendre en compte les données relatives aux secteurs géographiques élémentaires qui l'entourent.

Le risque d'inondation est également calculé à l'aide de données topographiques, cartographiques et/ou hydrologiques correspondant au secteur géographique élémentaire concerné ou à un ensemble de secteurs géographiques élémentaires. Ces données topographiques, cartographiques et/ou hydrologiques sont stockées dans la mémoire 12 du terminal 3 et de préférence dans sa mémoire dure 12b. La mémoire dure 12b peut aussi contenir des données statistiques et/ou un historique des lames d'eau lors des précédentes crues afin d'améliorer la fiabilité de l'évaluation du risque de crues.

Par ailleurs, le terminal peut également utiliser une série de bases bidimensionnelles de données météorologiques pour effectuer le calcul. Dans ce cas, la mémoire 12, et de préférence la mémoire vive 12a, mémorise une suite de bases bidimensionnelles, puis les moyens d'analyse 13 les utilise pour calculer le risque d'inondation. Le nombre de bases bidimensionnelles utilisées peut être choisi par l'utilisateur en fonction de la précision souhaitée.

Différentes méthodes peuvent ensuite être utilisées par les moyens d'analyse 13 pour déterminer le risque d'inondation à partir de ces données. Par exemple, chaque secteur géographique élémentaire de 1 km² peut être considéré comme un bassin versant virtuel et ainsi un débit à la sortie de ce bassin versant virtuel peut être calculé. Ce débit permet ensuite de calculer le niveau de risque d'une crue à l'aide des données topographiques, hydrologiques, statistiques et/ou historiques.

L'utilisateur peut choisir, grâce à l'interface d'entrée 14 du terminal 3, à partir de quel niveau de risque il souhaite être alerté : il définit ainsi un seuil d'alerte. Les moyens d'analyse 13 comparent alors le niveau de risque au seuil d'alerte. Lorsque ce seuil d'alerte est dépassé, le terminal 3 émet un signal d'alerte, par exemple sonore, grâce à l'interface de sortie 15.

Dans un mode de réalisation plus simple, le terminal peut se contenter de calculer la lame d'eau pour le secteur géographique élémentaire dans lequel il se trouve, et le seuil d'alerte défini par l'utilisateur est alors une lame d'eau maximale. Lorsque cette lame d'eau maximale est dépassée dans le secteur dans lequel se trouve l'utilisateur, l'interface de sortie 15 émet une alerte à l'intention de l'utilisateur.

Dans un autre mode de réalisation, les moyens d'analyse 13 calculent également le niveau de risque, ou le débit, pour un ensemble de secteurs élémentaires entourant le secteur géographique élémentaire dans lequel se trouve le terminal. Cet ensemble de secteurs élémentaires peut être par exemple un bassin versant, mais de manière générale l'utilisateur peut choisir l'étendue de l'ensemble de secteurs élémentaires qu'il souhaite placer sous surveillance. Dans ce cas, l'interface de sortie 15 comporte également un écran de visualisation 16 permettant d'afficher une cartographie du risque hydrologique pour cet ensemble de secteurs élémentaires grâce à un traitement du terminal qui assure la transformation des données météorologiques en débit de pluie pour chaque secteur de 1 km² en prenant en compte les données relatives au sol. Cette cartographie représente donc les différents secteurs de 1 km² autour du secteur dans lequel se trouve le terminal, chaque secteur étant associé à une nuance de couleur en fonction de l'importance du niveau de risque, ou du débit. Chaque secteur peut être représenté par un ou plusieurs pixels sur l'écran de visualisation 16. Dans ce mode de réalisation, l'utilisateur peut également choisir d'être averti dès que le niveau de risque ou le débit dans un des secteurs représentés dépasse un seuil d'alerte qu'il a choisi.

Bien sûr de nombreuses variantes sont possibles, en particulier en ce qui concerne les calculs effectués par le terminal pour déterminer le risque d'inondation à partir de sa position, des données topographiques, cartographiques et/ou hydrologiques et des données météorologiques.

Par ailleurs, ce procédé pourrait également être utilisé pour alerter un utilisateur d'un autre type de phénomène météorologique : par exemple, un terminal analogue pourrait alerter les utilisateurs d'un risque de grêle, de neige, de vent, de température ou encore de taux d'humidité des sols supérieur à un seuil d'alerte prédéfinit, en prenant en compte les données topographiques et de population relative à une zone donnée.

## Revendications

1. Terminal d'alerte pour un phénomène météorologique, qui comporte :
- des moyens de réception de données météorologiques d'une zone géographique transmises depuis un serveur distant de manière à constituer au moins une table bidimensionnelle de données météorologiques, la table comportant des cellules chacune correspondant à un secteur géographique élémentaire donné de la zone géographique,
- des moyens de positionnement du terminal dans la zone géographique pour déterminer le secteur géographique élémentaire de la zone géographique dans lequel se trouve le terminal,
- une mémoire comportant des données topographiques, cartographiques et/ou hydrologiques de la zone géographique,
- des moyens
- une interface de sortie comportant des moyens d'alerte permettant de signaler à un utilisateur un dépassement du seuil d'alerte, **caractérisé en ce que**
- le terminal comporte des moyens d'analyse pour calculer le risque météorologique dans le secteur géographique élémentaire dans lequel se trouve le terminal à partir:
-- de la connaissance du secteur géographique élémentaire dans lequel se trouve le terminal,
-- des données topographiques, cartographiques et/ou hydrologiques, et
-- de la table bidimensionelle de données météorologique à au moins un seuil d'alerte,
- le terminal comporte en outre une interface d'entrée permettant à un utilisateur de paramétrer le seuil d'alerte.

2. Terminal d'alerte pour un phénomène météorologique selon la revendication précédente, **caractérisé en ce que** les moyens de réception sont aptes à recevoir des ondes radio.

3. Terminal d'alerte pour un phénomène météorologique selon l'une quelconque des revendications précédentes, **caractérisé en ce que** les moyens de réception sont aptes à recevoir des micro-ondes.

4. Terminal d'alerte pour un phénomène météorologique selon l'une quelconque des revendications précédentes, **caractérisé en ce que** l'interface comporte des moyens d'alerte sonores, visuelles ou tactiles.

5. Terminal d'alerte pour un phénomène météorologique selon l'une quelconque des revendications précédentes, **caractérisé en ce que** les moyens d'analyse permettent d'établir une cartographie des risques météorologiques sur un ensemble de secteurs géographiques élémentaires entourant le secteur géographique élémentaire dans lequel se trouve le terminal, le terminal comportant en outre des moyens d'affichage permettant de représenter la cartographie des risques météorologiques sur cet ensemble de secteurs géographiques élémentaires.

6. Terminal d'alerte pour un phénomène météorologique selon la revendication 5, **caractérisé en ce que** les moyens d'alerte sont activés dès qu'un des secteurs géographiques élémentaires présente un risque météorologique supérieur au seuil d'alerte.

7. Terminal d'alerte pour un phénomène météorologique selon l'une quelconque des revendications précédentes, **caractérisé en ce que** chaque secteur géographique élémentaire correspond à 1 km².

8. Terminal d'alerte pour un phénomène météorologique selon l'une quelconque des revendications précédentes, **caractérisé en ce que** le risque météorologique calculé est un risque d'inondation.

9. Téléphone portable comportant un terminal d'alerte pour un phénomène météorologique selon l'une quelconque des revendications précédentes.

10. Système d'alerte pour un phénomène météorologique, **caractérisé en ce qu'**il comporte un serveur délivrant des données météorologiques et un ou plusieurs terminaux selon l'une quelconque des revendications précédentes, chaque terminal étant relié au serveur à l'aide de moyens de télécommunications.

11. Procédé d'alerte pour un phénomène météorologique, **caractérisé en ce qu'**il comporte les étapes suivantes:
- un serveur délivre, à l'aide de moyens de télécommunication, des données météorologiques pixellisées, les données météorologiques correspondant à une zone géographique divisée en secteurs géographiques élémentaires,
- des terminaux, mobiles ou fixes, reçoivent les données météorologiques, les terminaux comportent une interface d'entrée permettant à des utilisateurs de paramètre des seuils d'alerte,
- chaque terminal repère sa position dans la zone géographique,
- chaque terminal calcule un risque météorologique à partir des données météorologiques, de données topographiques, cartographiques et/ou hydrologiques et de sa position,
- chaque terminal compare ce risque météorologique à un seuil d'alerte,
- chaque terminal émet un signal d'alerte en cas de dépassement du seuil d'alerte.

12. Procédé d'alerte pour un phénomène météorologique selon la revendication précédente, **caractérisé en ce que** chaque terminal réalise une cartographie des risques météorologiques pour un ensemble de secteurs géographiques élémentaires entourant le secteur géographique élémentaire dans lequel il se trouve, par prise en compte des données météorologiques, des données topographiques, cartographiques et/ou hydrologiques, ainsi que de la position du terminal.

13. Procédé d'alerte pour un phénomène météorologique selon l'une quelconque des revendications 11 ou 12, **caractérisé en ce que** le terminal sélectionne les données topographiques, cartographiques et/ou hydrologiques correspondant au secteur géographique élémentaire dans lequel il se trouve.

14. Procédé d'alerte pour un phénomène météorologique selon l'une quelconque des revendications 11 à 13, **caractérisé en ce que** le terminal prend en compte les données topographiques, cartographiques et/ou hydrologiques correspondant aux secteurs géographiques élémentaires entourant le secteur géographique élémentaire dans lequel il se trouve.

15. Procédé d'alerte pour un phénomène météorologique selon l'une quelconque des revendications 11 à 14, **caractérisé en ce que** ce que les données météorologiques comportent des prévisions de précipitations et **en ce que** le risque météorologique calculé est un risque d'inondation.

## Patentansprüche

1. Warnendgerät für ein meteorologisches Phänomen, umfassend:
- Mittel zum Empfang von meteorologischen Daten einer geografischen Zone, die von einem entfernten Server übertragen werden, um mindestens eine zweidimensionale Tabelle von meteorologischen Daten darzustellen, wobei die Tabelle Zellen umfasst, die jeweils einem gegebenen elementaren geografischen Sektor der geografischen Zone entsprechen,
- Mittel zur Positionierung des Endgeräts in der geografischen Zone, um den elementaren geografischen Sektor der geografischen Zone, in der sich das Endgerät befindet, zu bestimmen,
- einen Speicher, umfassend topografische, kartografische und/oder hydrologische Daten der geografischen Zone,
- eine Ausgangsschnittstelle, umfassend Warnmittel, die es ermöglichen, einem Benutzer eine Überschreitung der Warnschwelle anzuzeigen,
**dadurch gekennzeichnet, dass**
- das Endgerät Analysemittel umfasst, um die meteorologische Gefahr in dem elementaren geografischen Sektor zu berechnen, in dem sich das Endgerät befindet, auf Basis:
-- der Kenntnis des elementaren geografischen Sektors, in dem sich das Endgerät befindet,
-- der topografischen, kartografischen und/oder hydrologischen Daten, und
-- der zweidimensionalen Tabelle von meteorologischen Daten mit mindestens einer Warnschwelle,
- das Endgerät ferner eine Eingabeschnittstelle umfasst, die es einem Benutzer ermöglicht, die Warnschwelle zu parametrieren.

2. Warnendgerät für ein meteorologisches Phänomen nach dem vorhergehenden Anspruch, **dadurch gekennzeichnet, dass** die Empfangsmittel geeignet sind, Funkwellen zu empfangen.

3. Warnendgerät für ein meteorologisches Phänomen nach einem der vorhergehenden Ansprüche, **dadurch gekennzeichnet, dass** die Empfangsmittel geeignet sind, Mikrowellen zu empfangen.

4. Warnendgerät für ein meteorologisches Phänomen nach einem der vorhergehenden Ansprüche, **dadurch gekennzeichnet, dass** die Schnittstelle akustische, visuelle oder taktile Warnmittel umfasst.

5. Warnendgerät für ein meteorologisches Phänomen nach einem der vorhergehenden Ansprüche, **dadurch gekennzeichnet, dass** die Analysemittel es ermöglichen, eine Kartografie der meteorologischen Gefahren in einer Gesamtheit von elementaren geografischen Sektoren zu erstellen, die den elementaren geografischen Sektor umgeben, in dem sich das Endgerät befindet, wobei das Endgerät ferner Anzeigemittel umfasst, die es ermöglichen, die Kartografie der meteorologischen Gefahren in dieser Gesamtheit von elementaren geografischen Sektoren darzustellen.

6. Warnendgerät für ein meteorologisches Phänomen nach Anspruch 5, **dadurch gekennzeichnet, dass** die Warnmittel aktiviert werden, sobald einer der elementaren geografischen Sektoren eine meteorologische Gefahr über der Warnschwelle aufweist.

7. Warnendgerät für ein meteorologisches Phänomen nach einem der vorhergehenden Ansprüche, **dadurch gekennzeichnet, dass** jeder elementare geografische Sektor 1 km² entspricht.

8. Warnendgerät für ein meteorologisches Phänomen nach einem der vorhergehenden Ansprüche, **dadurch gekennzeichnet, dass** die berechnete meteorologische Gefahr eine Überschwemmungsgefahr ist.

9. Mobiltelefon, umfassend ein Warnendgerät für ein meteorologisches Phänomen nach einem der vorhergehenden Ansprüche.

10. Warnsystem für ein meteorologisches Phänomen, **dadurch gekennzeichnet, dass** es einen Server, der meteorologische Daten liefert, und ein oder mehrere Endgeräte nach einem der vorhergehenden Ansprüche umfasst, wobei jedes Endgerät mit dem Server mit Hilfe von Telekommunikationsmitteln verbunden ist.

11. Warnverfahren für ein meteorologisches Phänomen, **dadurch gekennzeichnet, dass** es die folgenden Schritte umfasst:
- ein Server liefert mit Hilfe von Telekommunikationsmitteln meteorologische Pixel-Daten, wobei die meteorologischen Daten einer in elementare geografische Sektoren unterteilten geografischen Zone entsprechen,
- mobile oder fixe Endgeräte empfangen die meteorologischen Daten, wobei die Endgeräte eine Eingabeschnittstelle umfassen, die es Benutzern ermöglicht, Warnschwellen zu parametrieren,
- jedes Endgerät erfasst seine Position in der geografischen Zone,
- jedes Endgerät berechnet eine meteorologische Gefahr auf Basis der meteorologischen Daten, von topografischen, kartografischen und/oder hydrologischen Daten und seiner Position,
- jedes Endgerät vergleicht diese meteorologische Gefahr mit einer Warnschwelle,
- jedes Endgerät sendet ein Warnsignal im Falle einer Überschreitung der Warnschwelle.

12. Warnverfahren für ein meteorologisches Phänomen nach dem vorhergehenden Anspruch, **dadurch gekennzeichnet, dass** jedes Endgerät eine Kartografie der meteorologischen Gefahren für eine Gesamtheit von elementaren geografischen Sektoren erstellt, die den elementaren geografischen Sektor umgeben, in dem es sich befindet, unter Berücksichtigung der meteorologischen Daten, der topografischen, kartografischen und/oder hydrologischen Daten sowie der Position des Endgeräts.

13. Warnverfahren für ein meteorologisches Phänomen nach einem der Ansprüche 11 oder 12, **dadurch gekennzeichnet, dass** das Endgerät die topografischen, kartografischen und/oder hydrologischen Daten auswählt, die dem elementaren geografischen Sektor entsprechen, in dem es sich befindet.

14. Warnverfahren für ein meteorologisches Phänomen nach einem der Ansprüche 11 bis 13, **dadurch gekennzeichnet, dass** das Endgerät die topografischen, kartografischen und/oder hydrologischen Daten entsprechend den elementaren geografischen Sektoren berücksichtigt, die den elementaren geografischen Sektor umgeben, in dem es sich befindet.

15. Warnverfahren für ein meteorologisches Phänomen nach einem der Ansprüche 11 bis 14, **dadurch gekennzeichnet, dass** die meteorologischen Daten Niederschlagsvorhersagen umfassen, und dass die berechnete meteorologische Gefahr eine Überschwemmungsgefahr ist.

## Claims

1. Terminal for warning of a meteorological phenomenon, comprising:
- means for receiving meteorological data of a geographical area transmitted from a remote server so as to construct at least one two-dimensional table of meteorological data, the table comprising cells each corresponding to a given basic geographical sector of the geographical area,
- means for positioning the terminal in the geographical area in order to determine the basic geographical sector of the geographical area in which the terminal is located;
- a memory comprising topographic, cartographic, and/or hydrologic data of the geographical area,
- an output interface comprising warning means making it possible to signal to a user that the warning threshold has been exceeded,
**characterized in that**
- the terminal comprises analysis means for calculating the meteorological risk in the basic geographical sector in which the terminal is located, based on:
- knowledge of the basic geographical sector in which the terminal is located,
- topographic, cartographic, and/or hydrologic data, and
- the two-dimensional table of meteorological data at at least one warning threshold,
- the terminal further comprises an input interface enabling a user to configure the warning threshold.

2. Terminal for warning of a meteorological phenomenon according to the preceding claim, wherein the receiving means are capable of receiving radio waves.

3. Terminal for warning of a meteorological phenomenon according to any one of the preceding claims, wherein the receiving means are capable of receiving microwaves.

4. Terminal for warning of a meteorological phenomenon according to any one of the preceding claims, wherein the interface comprises audio, visual, or tactile warning means.

5. Terminal for warning of a meteorological phenomenon according to any one of the preceding claims, wherein the analysis means make it possible to create a meteorological risk map for a set of basic geographical sectors surrounding the basic geographical sector in which the terminal is located, the terminal further comprising display means for representing the meteorological risk map on this set of basic geographical sectors.

6. Terminal for warning of a meteorological phenomenon according to claim 5, wherein the warning means are activated as soon as one of the basic geographical sectors presents a meteorological risk above the warning threshold.

7. Terminal for warning of a meteorological phenomenon according to any one of the preceding claims, wherein each basic geographical sector corresponds to 1 km².

8. Terminal for warning of a meteorological phenomenon according to any one of the preceding claims, wherein the calculated meteorological risk is a flooding risk.

9. Mobile telephone comprising a terminal for warning of a meteorological phenomenon according to any one of the preceding claims.

10. System for warning of a meteorological phenomenon, **characterized in that** it comprises a server supplying meteorological data and one or more terminals according to any one of the preceding claims, each terminal being connected to the server by means of telecommunication means.

11. Method for warning of a meteorological phenomenon, **characterized in that** it comprises the following steps:
- a server delivers rasterized meteorological data by means of telecommunication means, the meteorological data corresponding to a geographical area divided into basic geographical sectors;
- mobile or fixed terminals receive the meteorological data, the terminals comprising an input interface enabling users to configure warning thresholds,
- each terminal identifies its position in the geographical area,
- each terminal calculates a meteorological risk based on meteorological, topographic, cartographic, and/or hydrologic data and its position,
- each terminal compares this meteorological risk with a warning threshold,
- each terminal sends a warning signal if the warning threshold is exceeded.

12. Method for warning of a meteorological phenomenon according to the preceding claim, wherein each terminal creates a meteorological risk map for a set of basic geographical sectors surrounding the basic geographical sector in which it is located, taking into account meteorological, topographic, cartographic, and/or hydrologic data, as well as the position of the terminal.

13. Method for warning of a meteorological phenomenon according to any one of claims 11 and 12, wherein the terminal selects the topographic, cartographic, and/or hydrologic data corresponding to the basic geographical sector in which it is located.

14. Method for warning of a meteorological phenomenon according to any one of claims 11 to 13, wherein the terminal takes into account the topographic, cartographic, and/or hydrologic data corresponding to the basic geographical sectors surrounding the basic geographical sector in which it is located.

15. Method for warning of a meteorological phenomenon according to any one of claims 11 to 14, wherein the meteorological data include precipitation forecasts and wherein the calculated meteorological risk is a flooding risk.
